# EUROPÄISCHE PATENTSCHRIFT

(11) **EP 1 167 461 B1**
(45) Veröffentlichungstag und Bekanntmachung des Hinweises auf die Patenterteilung: **19.09.2007**
(21) Anmeldenummer: 01114205.6
(22) Anmeldetag: 12.06.2001
(51) Int. Cl.: C09B 67/10, B01J 19/00, F28D 9/00

(54) **Verfahren zur Konditionierung von organischen Pigmenten**
Process for conditioning organic pigments
Procédé de conditionnement de pigments organiques

(30) Priorität: 28.06.2000 DE 10031558
(43) Veröffentlichungstag der Anmeldung: 02.01.2002
(73) Patentinhaber: Clariant Finance (BVI) Limited, Road Town, Tortola (VG)
(72) Erfinder: Nickel, Uwe, Dr., 61352 Bad Homburg (DE); Kund, Klaus, Dr., 65558 Langenscheid (DE); Dietz, Erwin, Dr., 61462 Königstein (DE); Weber, Joachim, Dr., 65929 Frankfurt am Main (DE); Schupp, Olaf, Dr., 65929 Frankfurt am Main (DE)
(74) Vertreter: Hütter, Klaus

(56) Entgegenhaltungen:
- EP-A- 0 318 022
- EP-A- 0 894 831
- DE-A- 3 926 466
- US-A- 3 256 285
- US-A- 4 906 735
- US-A- 5 534 328
- US-A- 5 811 062

## Beschreibung

Die vorliegende Erfindung beschreibt ein Verfahren zur Konditionierung von organischen Pigmenten in Mikroreaktoren.

Organische Pigmente sind seit langem bekannt und haben zum Pigmentieren von hochmolekularen organischen Materialien wie Lacken, Kunststoffen oder Druckfarben große industrielle Bedeutung erlangt. Bei der Synthese fallen die Pigmente meist entweder als sehr feine Präpigmente oder als grobe Rohpigmente an, die den technischen Anforderungen noch nicht entsprechen. Die feinteiligen Präpigmente müssen oftmals einer thermischen Behandlung unterworfen werden, um die geforderten Eigenschaften zu erreichen. Bei grobteiligen Rohpigmenten wird oftmals eine Feinverteilung zur Korngrößenverkleinerung durchgeführt, der meist eine thermische Behandlung folgen muß, um den technischen Anforderungen entsprechende Pigmente zu erhalten.

Die thermische Behandlung kann dabei verschiedene gewünschte Effekte bewirken, beispielsweise kann die Korngrößenverteilung enger werden, die mittlere Korngröße kann sich zu höheren Werten verschieben, die durch eine Mahlung zerkleinerten und stark agglomerierten Pigmente können desagglomieriert werden, es können Hilfsmittel zugegeben und homogen auf die Pigmentoberfläche verteilt werden, in manchen Fällen kann durch die thermische Behandlung ein Wechsel zwischen verschiedenen Kristallmodifkationen bewirkt werden. Diese Effekte führen dann zu den gewünschten technischen Anforderungen wie beispielsweise Erzielen des gewünschten Farbtons, Erhöhung der Farbstärke oder der Reinheit des Farbtons, Verbesserung der Dispergierbarkeit, der Rheologie, der Lichtechtheit, des Glanzes oder der Wetterechtheit, oder Steuerung der Lichtstreuungseigenschaften und damit der Deckkraft.

Aus der Literatur sind für die unterschiedlichsten organischen Pigmente Verfahren zur thermischen Behandlung bekannt:
Die DE-A-12 61 106 offenbart ein Batch-Verfahren zur thermischen Behandlung von substituierten Chinacridonpigmenten durch Erhitzen der Rohpigmente in Lösemitteln unter Druck.
Die EP-A-0 318 022 offenbart ein Batch-Verfahren zur Herstellung eines deckenden Dimethylperylimid-Pigments, bei dem die Deckkraft durch thermische Behandlung erzielt wird.
Die EP-A-0 672 729 offenbart ein Batch-Verfahren zur Herstellung eines deckenden Diketopyrrolopyrrol-Pigments, bei dem die Deckkraft durch eine thermische Behandlung erzielt wird.
Die EP-A-0 655 485 und die EP-A-0 799 863 offenbaren Batch-Verfahren zur Herstellung von Chinacridonpigmenten, bei denen die Umwandlung von der alpha-Phase in die beta-Phase durch thermische Behandlung mit einem organischen Lösemittel und in Gegenwart von wässrigem Alkali durchgeführt wird.

Bekannt sind Batch-Verfahren zur Herstellung eines Azopigments, bei dem eine thermische Behandlung in wässrigem Medium (EP-A-0 077 025) oder in organischen Lösemitteln (EP-A-0 894 831) durchgeführt wird.

Ein gemeinsames Merkmal dieser Batch-Verfahren ist die Notwendigkeit der Kontrolle der Verfahrensparameter: beispielsweise sind Temperatur und Dauer der thermischen Behandlung, Suspensionskonzentration, Einsatz von Lösemitteln oder Anwesenheit von Säuren oder Laugen entscheidend für die coloristischen Eigenschaften der erhaltenen Pigmente sowie deren Qualitätskonstanz. Auch ist der scale-up von neuen Produkten vom Labormaßstab in den großtechnischen Maßstab bei Batch-Verfahren aufwendig und kann Schwierigkeiten bereiten, da beispielsweise Kessel- und Rührergeometrien oder Wärmeübergänge großen Einfluss auf Korngröße, Korngrößenverteilung und coloristische Eigenschaften haben.

Der vorliegenden Erfindung lag die Aufgabe zugrunde, ein umweltfreundliches, kostengünstiges, technisch zuverlässiges Verfahren zur Herstellung von organischen Pigmenten durch thermische Behandlung zu finden, bei dem die gewünschten Verfahrensparameter möglichst konstant eingehalten werden können und der scale-up einfach zu bewerkstelligen ist.

Es ist bekannt, bestimmte chemische Umsetzungen in Mikroreaktoren durchzuführen. Mikroreaktoren sind aus Stapeln von strukturierten Platten aufgebaut und in der DE 39 26 466 C2 und US-A-5,534,328 beschrieben. In der US-A-5,811,062 wird darauf hingewiesen, dass Mikrokanal-Reaktoren vorzugsweise für Reaktionen benutzt werden, die keine Materialien oder Feststoffe benötigen oder produzieren, da diese die Mikrokanäle verstopfen können.

Es wurde nun gefunden, dass sich Mikroreaktoren überraschenderweise zur Konditionierung von organischen Pigmenten durch thermische Behandlung ihrer Präpigmentsuspensionen eignen.

Die verwendete Bezeichnung "Mikroreaktor" steht dabei stellvertretend für miniaturisierte, vorzugsweise kontinuierlich arbeitende Reaktoren, die unter der Bezeichnung Mikroreaktor, Minireaktor, Mikromischer oder Minimischer bekannt sind und sich aufgrund der Dimensionen und Aufbau der Kanalstrukturen unterscheiden. Beispielsweise können Mikroreaktoren, wie sie aus den angeführten Schriften oder aus Veröffentlichungen des Instituts für Mikrotechnik Mainz GmbH, Deutschland, oder des Fraunhofer Instituts für Chemische Technologie, Pfinztal, bekannt sind, oder auch kommerziell erhältliche Mikroreaktoren, wie beispielsweise der auf Cytos™ basierende Selecto™ der Firma Cellular Process Chemistry GmbH, Frankfurt/Main, eingesetzt werden.

Gegenstand der Erfindung ist ein Verfahren zur Konditionierung von organischen Pigmenten, dadurch gekennzeichnet, dass man eine flüssige Präpigmentsuspension in einem Mikroreaktor thermisch behandelt.

Zweckmäßigerweise wird die Präpigmentsuspension kontinuierlich dem Mikroreaktor zugeführt. Dabei kann die in herkömmlichen Verfahren verwendete Reihenfolge der Zugabe von Präpigmentsuspension, Wasser, organischen Lösemitteln, Säuren und/oder Laugen realisiert werden; auch können die in herkömmlichen Verfahren verwendeten Hilfsmittel ebenfalls im erfindungsgemäßen Verfahren eingesetzt werden.

Geeignete organische Pigmente sind beispielsweise Perylen-, Perinon-, Chinacridon-, Chinacridonchinon-, Anthrachinon-, Anthanthron-, Benzimidazolon-, Disazokondensations-, Azo-, Indanthron-, Phthalocyanin-, Triarylcarbonium-, Dioxazin-, Aminoanthrachinon-, Diketopyrrolopyrrol-, Thioindigo-, Thiazinindigo-, Isoindolin-, Isoindolinon-, Pyranthron-, Isoviolanthron-Pigmente oder Mischungen davon.

Bevorzugte organische Pigmente im Sinne der vorliegenden Erfindung sind beispielsweise C.I. Pigment Red 123 (C.I. No. 71 145), C.I. Pigment Red 149 (C.I. No. 71 137), C.I. Pigment Red 178 (C.I. No. 71 155), C.I. Pigment Red 179 (C.I. No. 71 130), C.I. Pigment Red 190 (C.I. 71 140), C.I. Pigment Red 224 (C.I. No. 71 127), C.I. Pigment Violet 29 (C.I. No. 71 129), C.I. Pigment Orange 43 (C.I. No. 71 105), C.I. Pigment Red 194 (C.I. No. 71 100), C.I. Pigment Violet 19 (C.I. No. 73 900), C.I. Pigment Red 122 (C.I. No. 73 915), C.I. Pigment Red 192, C.I. Pigment Red 202 (C.I. No. 73 907), C.I. Pigment Red 207, C.I. Pigment Red 209 (C.I. No. 73 905), C.I. Pigment Red 206 (C.I. No. 73 900/73 920), C.I. Pigment Orange 48 (C.I. No. 73 900/73 920), C.I. Pigment Orange 49 (C.I. No. 73 900/73 920), C.I. Pigment Orange 42, C.I. Pigment Yellow 147, C.I. Pigment Red 168 (C.I. No. 59 300), C.I. Pigment Yellow 120 (C.I. No. 11 783), C.I. Pigment Yellow 151 (C.I. No. 13 980), C.I. Pigment Brown 25 (C.I. No. 12 510), C.I. Pigment Violet 32 (C.I. No. 12 517), C.I. Pigment Orange 64; C.I. Pigment Brown 23 (C.I. No. 20 060), C.I. Pigment Red 166 (C.I. No. 20 730), C.I. Pigment Red 170 (C.I. No. 12 475), C.I. Pigment Orange 38 (C.I. No. 12 367), C.I. Pigment Red 188 (C.I. No. 12 467), C.I. Pigment Red 187 (C.I. No. 12 486), C.I. Pigment Orange 34 (C.I. No. 21 115), C.I. Pigment Orange 13 (C.I. No. 21 110), C.I. Pigment Red 9 (C.I. No. 12 460), C.I. Pigment Red 2 (C.I. No. 12 310), C.I. Pigment Red 112 (C.I. No. 12 370), C.I. Pigment Red 7 (C.I. No. 12 420), C.I. Pigment Red 210 (C.I. No. 12 477), C. I. Pigment Red 12 (C.I. No. 12 385), C.I. Pigment Blue 60 (C.I. No. 69 800), C.I. Pigment Green 7 (C.I. No. 74 260),C.I. Pigment Green 36 (C.I. No. 74 265); C.I. Pigment Blue 15:1, 15:2, 15:3, 15:4, 15:6 und 15 (C.I. No. 74 160); C.I. Pigment Blue 56 (C.I. No. 42 800), C.I. Pigment Blue 61 (C.I. No. 42 765:1), C.I. Pigment Violet 23 (C.I. No. 51 319), C.I. Pigment Violet 37 (C.I. No. 51 345), C.I. Pigment Red 177 (C.I. No. 65 300), C.I. Pigment Red 254 (C.I. No. 56 110), C.I. Pigment Red 255 (C.I. No. 56 1050), C.I. Pigment Red 264, C.I. Pigment Red 270, C.I. Pigment Red 272 (C.I. No. 56 1150), C.I. Pigment Red 71, C.I. Pigment Orange 73, C.I. Pigment Red 88 (C.I. No. 73 312), C.I. Pigment Yellow 175 (C.I. No. 11 784), C.I. Pigment Yellow 154 (C.I. No. 11 781), C.I. Pigment Yellow 83 (C.I. No. 21 108), C.I. Pigment Yellow 180 (C.I. No. 21 290), C.I. Pigment Yellow 181 (C.I. No. 11 777), C.I. Pigment Yellow 74 (C.I. No. 11 741), C.I. Pigment Yellow 213, C.I. Pigment Orange 36 (C.I. No. 11 780), C.I. Pigment Orange 62 (C.I. No. 11 775), C.I. Pigment Orange 72, C.I. Pigment Red 48:2/3/4 (C.I. No. 15 865:2/3/4), C.I. Pigment Red 53:1 (C.I. No. 15 585:1), C.I. Pigment Red 208 (C.I. No. 12 514), C.I. Pigment Red 185 (C.I. No. 12 516), C.I. Pigment Red 247 (C.I. No. 15 915).

Es können auch mehr als ein organisches Pigment oder Mischkristalle (solid solutions) von organischen Pigmenten oder Kombinationen von organischen mit anorganischen Pigmenten eingesetzt werden.

Die flüssige Phase der Präpigmentsuspension kann aus Wasser, organischen Lösemitteln, Säuren, Laugen oder aus einer Mischung einzelner oder aller dieser Stoffe bestehen.

Als organische Lösemittel eignen sich beispielsweise Alkohole mit 1 bis 10 C-Atomen, wie Methanol, Ethanol, n-Propanol, Isopropanol, n-Butanol, sek.-Butanol, tert.-Butanol, n-Pentanol, 2-Methyl-2-butanol, 2-Methyl-2-pentanol, 3-Methyl-3-pentanol, 2-Methyl-2-hexanol, 3-Ethyl-3-pentanol, 2,4,4-Trimethyl-2-pentanol, Cyclohexanol; oder Glykole, wie Ethylenglykol, Diethylenglykol oder Glycerin; Ether, wie Tetrahydrofuran, Dimethoxyethan oder Dioxan; Glykolether, wie Monomethyl-oder Monoethylether des Ethylen- oder Propylenglykols, Diethylenglykolmonomethylether, Diethylenglykol-monoethylether, Butylglykol oder Methoxybutanol; Ketone, wie Aceton, Diethylketon, Methylisobutylketon, Methylethylketon oder Cyclohexanon; aliphatische Säureamide, wie Formamid, Dimethylformamid oder N,N-Dimethylacetamid; Harnstoffderivate, wie Tetramethylharnstoff; oder cyclische Carbonsäureamide, wie N-Methylpyrrolidon, Valero- oder Caprolactam; Carbonsäure-C₁-C₄-alkylester, wie Ameisensäurebutylester, Essigsäureethylester oder Propionsäurepropylester; oder Carbonsäure-C₁-C₄-glykolester; oder Phthalsäure- oder Benzosäure-C₁-C₄-alkylester, wie Benzoesäureethylester; Nitrile, wie Acetonitril oder Benzonitril; aliphatische oder aromatische Kohlenwasserstoffe, wie Cyclohexan oder Benzol; oder durch Alkyl, Alkoxy, Nitro oder Halogen substituiertes Benzol, wie Toluol, Xylole, Ethylbenzol, Anisol, Nitrobenzol, Chlorbenzol, o-Dichlorbenzol, 1,2,4-Trichlorbenzol oder Brombenzol; oder andere substituierte Aromaten, wie Benzoesäure oder Phenol; aromatische Heterocyclen, wie Pyridin, Morpholin, Picolin oder Chinolin; sowie Dimethylsulfoxid und Sulfolan. Die genannten Lösemittel können auch als Mischungen eingesetzt werden.

Bevorzugte organische Lösemittel sind Alkohole mit 1 bis 6 C-Atomen, insbesondere Ethanol, Propanole, Butanole, Pentanole; aliphatische Carbonsäureamide, insbesondere Dimethylformamid oder N,N-Dimethylacetamid; cyclische Carbonsäureamide, insbesondere N-Methylpyrrolidon; aromatische Kohlenwasserstoffe, insbesondere Toluol, Xylole oder Ethylbenzol; aromatische Chlorkohlenwasserstoffe, insbesondere Chlorbenzol, o-Dichlorbenzol; und Dimethylsulfoxid.

Zweckmäßigerweise verwendet man 3 bis 40, bevorzugt 4 bis 20, insbesondere 5 bis 15, Gew.-Teile des flüssigen Mediums (Wasser, Lösemittel, Säure, Lauge) der Präpigmentsuspension auf 1 Gew.-Teil Präpigment.

Bei den Säuren handelt es sich beispielsweise um anorganische Säuren, wie z.B. Salzsäure, Phosphorsäure, und bevorzugt Schwefelsäure; oder um aliphatische oder aromatische Carbon- oder Sulfonsäuren, wie z.B. Ameisensäure, Essigsäure, Propionsäure, Buttersäure, Hexansäure, Oxalsäure, Benzoesäure, Phenylessigsäure, Benzolsulfonsäure oder p-Toluolsulfonsäure, bevorzugt Essigsäure und Ameisensäure; oder um Gemische von Säuren.

Bei den Laugen handelt es sich beispielsweise um anorganische Basen wie z.B. Natronlauge, Kalilauge, Soda, Kaliumcarbonat und Calciumhydroxid, bevorzugt Natronlauge; oder um Gemische von Laugen; oder um Basen wie z.B. Trimethylamin, Triethylamin oder Ammoniak; oder um Salze von organischen Säuren wie z.B. Natriumacetat oder Natriumformiat.

Vor, während oder nach der erfindungsgemäßen Konditionierung können ein oder mehrere Hilfsmittel aus der Gruppe der Pigmentdispergatoren, Tenside, Füllstoffe, Stellmittel, Harze, Entschäumer, Antistaubmittel, Extender, Farbmittel zum Nuancieren, Konservierungsmittel, Trocknungsverzögerungsmittel und Additive zur Steuerung der Rheologie der (Prä)Pigmentsuspension zugesetzt werden.

Als Pigmentdispergatoren kommen die in der Literatur bekannten Derivate von organischen Pigmenten, die Imidazol-, Pyrazol-, Phthalimid-, Sulfonamid-, Aminomethylen-, cylclische Carbonsäureamid- oder Saccharin-Gruppen, oder Sulfonsäure- oder Carbonsäure-Gruppen oder deren Salze enthalten, in Betracht.

Als Tenside kommen anionische oder anionaktive, kationische oder kationaktive und nichtionische Substanzen oder Mischungen dieser Mittel in Betracht.

Als anionaktive Substanzen kommen beispielsweise Fettsäuretauride, Fettsäure-N-methyltauride, Fettsäureisethionate, Alkylphenylsulfonate, Alkylnaphthalinsulfonate, Alkylphenolpolyglykolethersulfate, Fettalkoholpolyglykolethersulfate, Fettsäureamidpolyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, z.B. Palmitin-, Stearin- und Ölsäure; Seifen, z.B. Alkalisalze von Fettsäuren, Naphthensäuren und Harzsäuren, z.B. Abietinsäure, alkalilösliche Harze, z.B. kolophoniummodifizierte Maleinatharze und Kondensationsprodukte auf Basis von Cyanurchlorid, Taurin, N,N'-Diethylaminopropylamin und p-Phenylendiamin in Betracht. Besonders bevorzugt sind Harzseifen, d.h. Alkalisalze von Harzsäuren.

Als kationaktive Substanzen kommen beispielsweise quaternäre Ammoniumsalze, Fettaminoxalkylate, oxalkylierte Polyamine, Fettaminopolyglykolether, Fettamine, von Fettaminen oder Fettalkoholen abgeleitete Di- und Polyamine und deren Oxalkylate, von Fettsäuren abgeleitete Imidazoline, und Salze dieser kationenaktiven Substanzen in Betracht.

Als nichtionogene Substanzen kommen beispielsweise Aminoxide, Fettalkoholpolyglykolether, Fettsäurepolyglykolester, Betaine, wie Fettsäureamid-N-propyl-betaine, Phosphorsäurester von Fettalkoholen oder Fettalkoholpolyglykolethern, Fettsäureamidethoxylate, Fettalkohol-alkylenoxid-Addukte und Alkylphenolpolyglykolether in Betracht.

Die Gesamtmenge der zugegebenen Hilfsmittel kann 0 bis 40 Gew.-%, bevorzugt 0,5 bis 20 Gew.-%, besonders bevorzugt 1 bis 15 Gew.-%, bezogen auf (Prä)Pigment, betragen.

Im folgenden werden Präpigment, Wasser, Lösemittel, Säure, Lauge und Hilfsmittel zusammenfassend Einsatzstoffe genannt.

Zur erfindungsgemäßen Durchführung der Konditionierung werden die Einsatzstoffe einzeln oder als Mischungen in einen Mikroreaktor eingeleitet. Prinzipiell sind alle denkbaren Kombinationen der Einsatzstoffe möglich; dabei müssen die Materialströme technisch handhabbar sein.

Die Herstellung von Mischungen von Einsatzstoffen zu Materialströmen kann auch vorher in Mikromischern oder in vorgeschalteten Vermischungszonen stattfinden. Es können auch Einsatzstoffe in nachgeschalteten Vermischungszonen oder in nachgeschalteten Mikromischern oder -reaktoren zudosiert werden.

Die thermische Behandlung wird bei Drücken zwischen Normaldruck und 100 bar, bevorzugt zwischen Normaldruck und 25 bar, durchgeführt. Die Temperatur kann in weiten Bereichen liegen, bevorzugt zwischen 20 und 300°C, insbesondere zwischen 50 und 250°C, vor allem zwischen 60 und 200°C.

Die erfindungsgemäße Durchführung der thermischen Behandlung kann auch direkt anschließend an eine in einem Mikroreaktor durchgeführte Synthese eines organischen Pigments in einem nachgeschalteten Mikroreaktor stattfinden.

Die nach dem erfindungsgemäßen Verfahren hergestellten Pigmentsuspensionen werden nach bekannten Verfahren aufgearbeitet und das Pigment isoliert. Lösemittel können recyclisiert werden.

Ein Mikroreaktor ist aus mehreren aufeinandergestapelten und miteinander verbundenen Plättchen aufgebaut, auf deren Oberflächen sich mikromechanisch erzeugte Strukturen befinden, die in ihrem Zusammenwirken Räume bilden, um chemische Reaktionen auszuführen. Es ist wenigstens ein durch das System hindurchführender Kanal enthalten, der mit dem Einlass und dem Auslass verbunden ist.
Die Flussraten der Materialströme sind apparativ limitiert, beispielsweise durch die sich je nach geometrischer Auslegung des Mikroreaktors einstellenden Drücke. Es ist wünschenswert, dass die thermische Behandlung im Mikroreaktor vollständig abläuft, es kann sich aber auch eine Verweilzone anschließen, um eine gegebenenfalls erforderliche Verweilzeit zu schaffen.

Die Flussraten sind zweckmäßigerweise zwischen 0,05 ml/min und 5 l/min, bevorzugt zwischen 0,05 ml/min und 500 ml/min, besonders bevorzugt zwischen 0,05 ml/min und 250 ml/min, und insbesondere zwischen 0,1 ml/min und 100 ml/min.

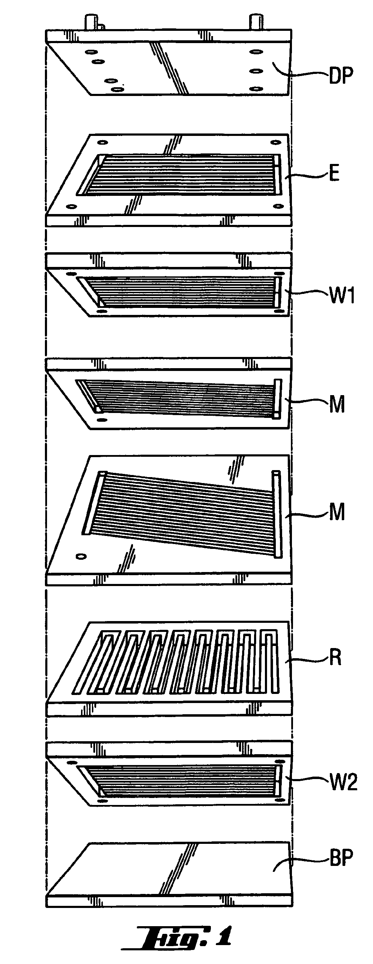

Beispielhaft wird in Figur 1 ein für die Herstellung von organischen Pigmenten durch thermische Behandlung einsetzbarer Mikroreaktor beschrieben.
Das vorliegende Mikroreaktionssystem ist in diesem Fall ein aus sechs, aufeinander gestapelten und miteinander verbundenen mikrostrukturierten Blechlagen und je einer Deckelplatte (DP) und Bodenplatte (BP) aufgebautes verfahrenstechnisches Modul, das durch den Zusammenbau unter Druck gehalten oder fest verbunden wird, um Abdichtflächen zwischen den Platten zusammenzupressen.

Das vorliegende Mikroreaktionssystem beinhaltet zwei Wärmetauscher für Kühl-und/oder Heizmedium, eine Mischzone für eine gegebenfalls erforderliche Vermischung der Einsatzstoffe sowie eine kurze Verweilstrecke.
Mit Hilfe des Wärmetauschers (W1) werden die in Platte (E) getrennt einströmenden Materialströme vortemperiert. In den Platten (M), die ein gemeinsames Volumen bilden, findet dann gegebenenfalls die Vermischung der Materialströme bzw. der Einsatzstoffe statt. In der Verweilzone (R) wird die Präpigmentsuspension mit Hilfe des Wärmetauschers (W2) auf die vorstehend genannten Temperatur gebracht, so dass die thermische Behandlung stattfinden kann.

Ein Mikroreaktionssystem wird vorzugsweise kontinuierlich betrieben, wobei sich die im Mikroreaktor befindlichen Materialmengen im Mikro- (µl) bis Milliliter (ml) -Bereich bewegen.

Entscheidend für die thermische Behandlung von organischen Pigmenten in einem Mikroreaktionssystem sind die Dimensionen der mikrostrukturierten Bereiche innerhalb eines Reaktors. Diese müssen so dimensioniert sein, dass insbesondere Feststoffteilchen problemlos passieren können und so keine Verstopfung der Kanäle auftritt. Die kleinste lichte Weite der Mikrostrukturen ist vorteilhafterweise ca. zehnmal größer als der Durchmesser der größten Teilchen. Weiterhin wird durch entsprechende geometrische Gestaltung dafür gesorgt, dass keine Totvolumina, wie z.B. Sackgassen oder scharfe Ecken, in denen z.B. Teilchen sedimentieren können, vorhanden sind. Bevorzugt sind daher kontinuierliche Bahnen ohne Ecken oder mit abgerundeten Ecken. Die Strukturen müssen klein genug sein, um die immanenten Vorteile der Mikroreaktionstechnik auszunutzen, nämlich hervorragende Wärmekontrolle, laminare Schichtenströmung, diffusives Mischen und geringes internes Volumen.

Die lichte Weite der suspensionsführenden Kanäle beträgt zweckmäßigerweise 5 bis 10000 µm, vorzugsweise 5 bis 3000 µm, besonders bevorzugt 10 bis 800 µm, insbesondere 20 bis 700 µm.

Die lichte Weite der Wärmetauscherkanäle richtet sich in erster Linie nach der lichten Weite der suspensionsführenden Kanäle und ist zweckmäßigerweise kleiner oder gleich 10000 µm, vorzugsweise kleiner oder gleich 3000 µm, insbesondere kleiner oder gleich 800 µm. Die Untergrenze der lichten Weite der Wärmetauscherkanäle ist unkritisch und wird allenfalls durch den Druckanstieg der zu pumpenden Wärmetauscherflüssigkeit und von der Notwendigkeit der optimalen Wärmezufuhr oder -abfuhr begrenzt.

Die Dimensionen eines bevorzugt verwendeten, in Fig.1 beispielhaft dargestellten Mikroreaktionssystems sind:

| | | |
|---|---|---|
| Wärmetauscherstrukturen: | Kanalbreite | -600 µm |
| | Kanalhöhe | -250 µm |
| Mischer: | Kanalbreite | -600 µm |
| | Kanalhöhe | -500 µm |

Im beispielhaft beschriebenen Mikroreaktor-Typ werden die sechs aufeinanderliegenden und dicht miteinander verbundenen Blechlagen vorzugsweise von oben mit allen Wärmetauscherfluiden und Einsatzstoffen beschickt. Die Abfuhr der Pigmentsuspension und der Wärmertauscherfluide erfolgt vorzugsweise ebenfalls nach oben. Die eventuelle Zufuhr weiterer an der thermischen Behandlung beteiligter Einsatzstoffe (z.B. Wasser, Lösemittel, Säuren oder Laugen) kann auch über eine direkt vor oder nach dem Reaktor befindliche T-Verzweigung realisiert werden. Die Kontrolle der benötigten Konzentrationen und Flüsse wird vorzugsweise über Präzisionskolbenpumpen und einer computergesteuerten Regelung vorgenommen. Die Temperatur wird über integrierte Sensoren überwacht und mit Hilfe der Regelung und eines Thermostaten/Cryostaten gesteuert.

Das hier dargestellte System ist aus Edelstahl gefertigt; andere Materialien wie zum Beispiel Glas, Keramik, Silizium, Kunststoffe oder andere Metalle sind ebenso einsetzbar.

Es war überraschend und nicht vorhersehbar, dass die Konditionierung von organischen Pigmenten durch thermische Behandlung in dieser technisch einfachen und zuverlässigen Weise möglich ist, da bei einem Anfall von Feststoff im Mikroreaktor bislang davon ausgegangen wurde, dass das System verstopft.

Erfindungsgemäß hergestellte organische Pigmente eignen sich zum Pigmentieren von hochmolekularen natürlichen oder synthetischen organischen Materialien, wie beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmente als Blends oder in Form von Präparationen oder Dispersionen zu benutzen. Bezogen auf das zu pigmentierende, hochmolekulare organische Material setzt man die erfindungsgemäß hergestellten Pigmente in einer Menge von vorzugsweise 0,05 bis 30 Gew.-%, vorzugsweise 0,1 bis 15 Gew.-% ein.

Mit den nach dem erfindungsgemäßen Verfahren hergestellten Pigmenten können die technisch gängigen Einbrennlacke aus der Klasse der Alkyd-Melamin-Harzlacke, Acryl-Melamin-Harzlacke, Polyesterlacke, Highsolidacrylharzlacke, wässrige Lacke auf Polyurethanbasis sowie Zweikomponentenlacke auf Basis polyisocyanatvernetzbarer Acrylharze und insbesondere Automobil-Metallic-Lacke pigmentiert werden.

Die erfindungsgemäß konditionierten Pigmente sind auch geeignet als Farbmittel in elektrophotographischen Tonern und Entwicklern, wie z. B. Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäß konditionierten Pigmente geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Hartem eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß konditionierten Pigmente als Farbmittel in Ink-Jet Tinten auf wässriger und nichtwässriger Basis sowie in solchen Tinten, die nach dem hot-melt-Verfahren arbeiten, geeignet.

Darüber hinaus sind die erfindungsgemäß konditionierten Pigmente auch als Farbmittel für Farbfilter, sowohl für die subtraktive als auch für die additive Farberzeugung, geeignet.

Zur Beurteilung der Eigenschaften der nach der Erfindung konditionierten Pigmente auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein High-Solid-Acrylharzeinbrennlack auf Basis einer nichtwäßrigen Dispersion (HS) sowie ein wäßriger Lack auf Polyurethanbasis (PUR) ausgewählt.
Die Bestimmung der Farbstärke und des Farbtons erfolgte nach DIN 55986. Die Rheologie des Mahlguts nach der Dispergierung (mill base-Rheologie) wurde anhand der folgenden fünfstufigen Skala bewertet:
- 5: dünnflüssig
- 4: flüssig
- 3: dickflüssig
- 2: leicht gestockt
- 1: gestockt

Nach dem Verdünnen des Mahlguts auf die Pigmentendkonzentration wurde die Viskosität mit dem Viskospatel nach Rossmann, Typ 301 der Firma Erichsen beurteilt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

Die Bestimmung der Kristallphase der Pigmente erfolgte durch Röntgenspektroskopie. Die Aufnahme der Röntgenspektren erfolgte mit Cu Kα-Strahlung. Die Röntgenbeugungsspektren sind in digitaler Form wiedergegeben. Die relativen Intensitäten von starken Linien betragen 51-100%, von mittleren Linien 11-50% und von schwachen Linien 2-10%.

In den nachstehenden Beispielen beziehen sich Teile jeweils auf Gewichtsteile und Prozente jeweils auf Gewichtsprozente.

### Beispiel 1:

0,1 mol Aminoterephthalsäuredimethylester-Hydrochlorid werden bei 0 bis 10°C mit Natriumnitrit diazotiert. Die geklärte Diazoniumsalzlösung wird bei Raumtemperatur in 1 Stunde zu einer acetatgepufferten Suspension von 0,1 mol N-Acetoacetyl-6-methoxy-7-amino-chinoxalin-2,3-dion in Gegenwart eines Tensids, z.B. ®Lutensol AT 25, zugetropft. Sobald die Kupplung beendet ist, wird auf 96°C geheizt, filtiert und salzfrei gewaschen. Der feuchte Presskuchen wird bei 80°C getrocknet und man erhält Präpigment C.I. Pigment Yellow 213.
150 Teile Präpigment C.I. Pigment Yellow 213 werden in 1850 Teilen N-Methylpyrrolidon suspendiert und über eine kalibrierte Kolbenpumpe in den Eingang des Mikroreaktors mit einer Flußrate von 6 ml/min gepumpt. Dort wird die Suspension auf 180°C erhitzt. Die aus dem Reaktor austretende Reaktionssuspension wird filtriert, der Presskuchen mit N-Methylpyrrolidon gewaschen und unter Vakuum getrocknet.
Das Präpigment liegt in der alpha-Phase vor, charakterisiert besonders durch starke Linien bei 2Theta 3,2, 7,9 und 8,8; und durch eine mittlere, breite Linie bei 26,6. Während der Konditionierung im Mikroreaktor findet ein Kristallmodifikationswechsel statt, das nach der Konditionierung isolierte Pigment liegt in der beta-Phase vor: Die drei für die alpha-Phase charakteristischen Linien sind nicht mehr beobachtbar, dafür tritt eine neue starke Linie bei 2Theta 9,2 auf; die Linie bei 26,6 wird zur stärksten Linie im Diagramm.
Die Korngrößen des Präpigments sind deutlich kleiner 70 nm; das konditionierte Pigment hat eine Korngrößenverteilung mit einem mittleren Korngrößendurchmesser von 221 nm.
Das Präpigment besitzt einen rotstichig-gelbe Farbton, während das konditionierte Pigment einen grünstichig-gelben Farbton hat.

### Beispiel 2

Das Pigment wird wie in Beispiel 1 hergestellt mit dem einzigen Unterschied, daß die Konditionierung nicht bei 180°C, sondern bei 130°C erfolgt.
Das so hergestellte Pigment liegt ebenfalls in der beta-Phase vor, hat auch den grünstichig-gelben Farbton, ist jedoch im Vergleich zum gemäß Beisiel 1 hergestellten Pigment bedeutend transparenter und wesentlich farbstärker.

## Patentansprüche

1. Verfahren zur Konditionierung von organischen Pigmenten, **dadurch gekennzeichnet, dass** man eine flüssige Präpigmentsuspension in einem Mikroreaktor thermisch behandelt.

2. Verfahren nach Anspruch 1, **dadurch gekennzeichnet, dass** die flüssige Präpigmentsuspension kontinuierlich in den Mikroreaktor eingeleitet wird.

3. Verfahren nach Anspruch 1 oder 2, **dadurch gekennzeichnet, dass** eine Perylen-, Perinon-, Chinacridon-, Chinacridonchinon-, Anthrachinon-, Anthanthron-, Benzimidazolon-, Disazokondensations-, Azo-, Indanthron-, Phthalocyanin-, Triarylcarbonium-, Dioxazin-, Aminoanthrachinon-, Diketopyrrolopyrrol-, Thioindigo-, Thiazinindigo-, Isoindolin-, Isoindolinon-, Pyranthron- oder Isoviolanthron-Präpigmentsuspension oder eine Mischung davon thermisch behandelt wird.

4. Verfahren nach mindestens einem der Ansprüche 1 bis 3, **dadurch gekennzeichnet, dass** eine Präpigmentsuspension von C.I. Pigment Red 123 (C.I. No. 71 145), C.I. Pigment Red 149 (C.I. No. 71 137), C.I. Pigment Red 178 (C.I. No. 71 155), C.I. Pigment Red 179 (C.I. No. 71 130), C.I. Pigment Red 190 (C.I. 71 140), C.I. Pigment Red 224 (C.I. No. 71 127), C.I. Pigment Violet 29 (C.I. No. 71 129), C.I. Pigment Orange 43 (C.I. No. 71 105), C.I. Pigment Red 194 (C.I. No. 71 100), C.I. Pigment Violet 19 (C.I. No. 73 900), C.I. Pigment Red 122 (C.I. No. 73 915), C.I. Pigment Red 192, C.I. Pigment Red 202 (C.I. No. 73 907), C.I. Pigment Red 207, C.I. Pigment Red 209 (C.I. No. 73 905), C.I. Pigment Red 206 (C.I. No. 73 900/73 920), C.I. Pigment Orange 48 (C.I. No. 73 900/73 920), C.I. Pigment Orange 49 (C.I. No. 73 900/73 920), C.I. Pigment Orange 42, C.I. Pigment Yellow 147, C.I. Pigment Red 168 (C.I. No. 59 300), C.I. Pigment Yellow 120 (C.I. No. 11 783), C.I. Pigment Yellow 151 (C.I. No. 13 980), C.I. Pigment Brown 25 (C.I. No. 12 510), C.I. Pigment Violet 32 (C.I. No. 12 517), C.I. Pigment Orange 64; C.I. Pigment Brown 23 (C.I. No. 20 060), C.I. Pigment Red 166 (C.I. No. 20 730), C.I. Pigment Red 170 (C.I. No. 12 475), C.I. Pigment Orange 38 (C.I. No. 12 367), C.I. Pigment Red 188 (C.I. No. 12 467), C.I. Pigment Red 187 (C.I. No. 12 486), C.I. Pigment Orange 34 (C.I. No. 21 115), C.I. Pigment Orange 13 (C.I. No. 21 110), C.I. Pigment Red 9 (C.I. No. 12 460), C.I. Pigment Red 2 (C.I. No. 12 310), C.I. Pigment Red 112 (C.I. No. 12 370), C.I. Pigment Red 7 (C.I. No. 12 420), C.I. Pigment Red 210 (C.I. No. 12 477), C.I. Pigment Red 12 (C.I. No. 12 385), C.I. Pigment Blue 60 (C.I. No. 69 800), C.I. Pigment Green 7 (C.I. No. 74 260),C.I. Pigment Green 36 (C.I. No. 74 265); C.I. Pigment Blue 15:1, 15:2, 15:3, 15:4, 15:6 und 15 (C.I. No. 74 160); C.I. Pigment Blue 56 (C.I. No. 42 800), C.I. Pigment Blue 61 (C.I. No. 42 765:1), C.I. Pigment Violet 23 (C.I. No. 51 319), C.I. Pigment Violet 37 (C.I. No. 51 345), C.I. Pigment Red 177 (C.I. No. 65 300), C.I. Pigment Red 254 (C.I. No. 56 110), C.I. Pigment Red 255 (C.I. No. 56 1050), C.I. Pigment Red 264, C.I. Pigment Red 270, C.I. Pigment Red 272 (C.I. No. 56 1150), C.I. Pigment Red 71, C.I. Pigment Orange 73, C.I. Pigment Red 88 (C.I. No. 73 312) C.I. Pigment Yellow 175 (C.I. No. 11 784), C.I. Pigment Yellow 154 (C.I. No. 11 781), C.I. Pigment Yellow 83 (C.I. No. 21 108), C.I. Pigment Yellow 180 (C.I. No. 21 290), C.I. Pigment Yellow 181 (C.I. No. 11 777), C.I. Pigment Yellow 74 (C.I. No. 11 741), C.I. Pigment Yellow 213, C.I. Pigment Orange 36 (C.I. No. 11 780), C.I. Pigment Orange 62 (C.I. No. 11 775), C.I. Pigment Orange 72, C.I. Pigment Red 48:2/3/4 (C.I. No. 15 865:2/3/4), C.I. Pigment Red 53:1 (C.I. No. 15 585:1), C.I. Pigment Red 208 (C.I. No. 12 514), C.I. Pigment Red 185 (C.I. No. 12 516), C.I. Pigment Red 247 (C.I. No. 15 915) oder eine Mischung davon thermisch behandelt wird.

5. Verfahren nach mindestens einem der Ansprüche 1 bis 4, **dadurch gekennzeichnet, dass** die Präpigmentsuspension im wesentlichen aus einem Präpigment, sowie aus einem flüssigen Medium, bestehend im wesentlichen aus Wasser, einem oder mehreren organischen Lösemitteln, einer Säure, einer Lauge oder aus einer Mischung davon, besteht.

6. Verfahren nach Anspruch 5, **dadurch gekennzeichnet, dass** die Präpigmentsuspension pro Gewichtsteil Präpigment 3 bis 40 Gewichtsteile, vorzugsweise 4 bis 20 Gewichtsteile, des flüssigen Mediums enthält.

7. Verfahren nach mindestens einem der Ansprüche 1 bis 6, **dadurch gekennzeichnet, dass** die thermische Behandlung bei einer Temperatur zwischen 20 und 300°C, vorzugsweise zwischen 50 und 250°C, durchgeführt wird.

8. Verfahren nach mindestens einem der Ansprüche 1 bis 7, **dadurch gekennzeichnet, dass** die thermische Behandlung bei einem Druck zwischen Normaldruck und 100 bar durchgeführt wird.

9. Verfahren nach mindestens einem der Ansprüche 1 bis 8, **dadurch gekennzeichnet, dass** die Flussrate der eingeleiteten flüssigen Präpigmentsuspension und die Temperatur der thermischen Behandlung über im Mikroreaktor integrierte Sensoren und Regelkreise erfasst und kontrolliert werden.

10. Verfahren nach mindestens einem der Ansprüche 1 bis 9, **dadurch gekennzeichnet, dass** das Präpigment, das als flüssige Präpigmentsuspension in einem Mikroreaktor thermisch behandelt wird, in einem Mikroreaktor hergestellt wurde.

11. Verfahren zum Pigmentieren von hochmolekularen natürlichen oder synthetischen organischen Materialien oder Ink-Jet-Tinten, **dadurch gekennzeichnet, dass** man eine flüssige Präpigmentsuspension nach einem oder mehreren der Ansprüche 1 bis 10 behandelt und das hochmolekulare organische Material oder die Ink-Jet-Tinte damit pigmentiert.

12. Verfahren nach Anspruch 11, **dadurch gekennzeichnet, dass** das hochmolekulare organische Material ein elektrophotographischer Toner oder Entwickler, ein Pulverlack oder ein Farbfilter ist.

## Claims

1. A process for conditioning organic pigments, which comprises thermally treating a liquid prepigment suspension in a microreactor.

2. A process as claimed in claim 1, wherein the liquid prepigment suspension is introduced into the microreactor continuously.

3. A process as claimed in claim 1 or 2, wherein a perylene, perinone, quinacridone, quinacridonequinone, anthraquinone, anthanthrone, benzimidazolone, disazo condensation, azo, indanthrone, phthalocyanine, triarylcarbonium, dioxazine, aminoanthraquinone, diketopyrrolopyrrole, thioindigo, thiazineindigo, isoindoline, isoindolinone, pyranthrone or isoviolanthrone prepigment suspension or a mixture thereof is thermally treated.

4. A process as claimed in at least one of claims 1 to 3, wherein a prepigment suspension of C.I. Pigment Red 123 (C.I. No. 71 145), C.I. Pigment Red 149 (C.I. No. 71 137), C.I. Pigment Red 178 (C.I. No. 71 155), C.I. Pigment Red 179 (C.I. No. 71 130), C.I. Pigment Red 190 (C.I. 71 140), C.I. Pigment Red 224 (C.I. No. 71 127), C.I. Pigment Violet 29 (C.I. No. 71 129), C.I. Pigment Orange 43 (C.I. No. 71 105), C.I. Pigment Red 194 (C.I. No. 71 100), C.I. Pigment Violet 19 (C.I. No. 73 900), C.I. Pigment Red 122 (C.I. No. 73 915), C.I. Pigment Red 192, C.I. Pigment Red 202 (C.I. No. 73 907), C.I. Pigment Red 207, C.I. Pigment Red 209 (C.I. No. 73 905), C.I. Pigment Red 206 (C.I. No. 73 900/73 920), C.I. Pigment Orange 48 (C.I. No. 73 900/73 920), C.I. Pigment Orange 49 (C.I. No. 73 900/73 920), C.I. Pigment Orange 42, C.I. Pigment Yellow 147, C.I. Pigment Red 168 (C.I. No. 59 300), C.I. Pigment Yellow 120 (C.I. No. 11 783), C.I. Pigment Yellow 151 (C.I. No. 13 980), C.I. Pigment Brown 25 (C.I. No. 12 510), C.I. Pigment Violet 32 (C.I. No. 12 517), C.I. Pigment Orange 64; C.I. Pigment Brown 23 (C.I. No. 20 060), C.I. Pigment Red 166 (C.I. No. 20 730), C.I. Pigment Red 170 (C.I. No. 12 475), C.I. Pigment Orange 38 (C.I. No. 12 367), C.I. Pigment Red 188 (C.I. No. 12 467), C.I. Pigment Red 187 (C.I. No. 12 486), C.I. Pigment Orange 34 (C.I. No. 21 115), C.I. Pigment Orange 13 (C.I. No. 21 110), C.I. Pigment Red 9 (C.I. No. 12 460), C.I. Pigment Red 2 (C.I. No. 12 310), C.I. Pigment Red 112 (C.I. No. 12 370), C.I. Pigment Red 7 (C.I. No. 12 420), C.I. Pigment Red 210 (C.I. No. 12 477), C.I. Pigment Red 12 (C.I. No. 12 385), C.I. Pigment Blue 60 (C.I. No. 69 800), C.I. Pigment Green 7 (C.I. No. 74 260), C.I. Pigment Green 36 (C.I. No. 74 265); C.I. Pigment Blue 15:1, 15:2, 15:3, 15:4, 15:6 and 15 (C.I. No. 74 160); C.I. Pigment Blue 56 (C.I. No. 42 800), C.I. Pigment Blue 61 (C.I. No. 42 765:1), C.I. Pigment Violet 23 (C.I. No. 51 319), C.I. Pigment Violet 37 (C.I. No. 51 345), C.I. Pigment Red 177 (C.I. No. 65 300), C.I. Pigment Red 254 (C.I. No. 56 110), C.I. Pigment Red 255 (C.I. No. 56 1050), C.I. Pigment Red 264, C.I. Pigment Red 270, C.I. Pigment Red 272 (C.I. No. 56 1150), C.I. Pigment Red 71, C.I. Pigment Orange 73, C.I. Pigment Red 88 (C.I. No. 73 312) C.I. Pigment Yellow 175 (C.I. No. 11 784), C.I. Pigment Yellow 154 (C.I. No. 11 781), C.I. Pigment Yellow 83 (C.I. No. 21 108), C.I. Pigment Yellow 180 (C.I. No. 21 290), C.I. Pigment Yellow 181 (C.I. No. 11 777), C.I. Pigment Yellow 74 (C.I. No. 11 741), C.I. Pigment Yellow 213, C.I. Pigment Orange 36 (C.I. No. 11 780), C.I. Pigment Orange 62 (C.I. No. 11 775), C.I. Pigment Orange 72, C.I. Pigment Red 48:2/3/4 (C.I. No. 15 865:2/3/4), C.I. Pigment Red 53:1 (C.I. No. 15 585:1), C.I. Pigment Red 208 (C.I. No. 12 514), C.I. Pigment Red 185 (C.I. No. 12 516), C.I. Pigment Red 247 (C.I. No. 15 915)
or a mixture thereof is thermally treated.

5. A process as claimed in at least one of claims 1 to 4, wherein the prepigment suspension consists essentially of a prepigment and of a liquid medium consisting essentially of water, one or more organic solvents, an acid, a base or a mixture thereof.

6. A process as claimed in claim 5, wherein the prepigment suspension contains 3 to 40 parts by weight, preferably 4 to 20 parts by weight, of the liquid medium per part by weight of prepigment.

7. A process as claimed in at least one of claims 1 to 6, wherein the thermal treatment is carried out at a temperature between 20 and 300°C, preferably between 50 and 250°C.

8. A process as claimed in at least one of claims 1 to 7, wherein the thermal treatment is carried out at a pressure between atmospheric pressure and 100 bar.

9. A process as claimed in at least one of claims 1 to 8, wherein the flow rate of the introduced liquid prepigment suspension and the temperature of the thermal treatment are captured and controlled via sensors and control circuits integrated in the microreactor.

10. A process as claimed in at least one of claims 1 to 9, wherein the prepigment which is thermally treated as a liquid prepigment suspension in a microreactor was prepared in a microreactor.

11. A process for pigmenting macromolecular natural or synthetic organic materials or inkjet inks, which comprises a liquid prepigment suspension being treated according to one or more of claims 1 to 10 and the macromolecular organic material or the inkjet ink being pigmented therewith.

12. A process as claimed in claim 11, wherein the macromolecular organic material is an electrophotographic toner or developer, a powder coating or a color filter.

## Revendications

1. Procédé de conditionnement de pigments organiques,
**caractérisé en ce qu'**on traite thermiquement une suspension liquide de pré-pigments dans un microréacteur.

2. Procédé selon la revendication 1,
**caractérisé en ce que** la suspension liquide de pré-pigments est initiée en continu dans le microréacteur.

3. Procédé selon la revendication 1 ou la revendication 2,
**caractérisé en ce qu'**on traite thermiquement une suspension de pré-pigments de pérylène, de périnone, de quinacridone, de chinacridonequinone, d'anthraquinone, d'anthratrone, de benzimidazolone, de condensation diazo, azo, d'indanthrone, de phtalocyanine, de triarylcarbonium, de dioxazine, d'aminoanthraquinone, de dicétopyrrolopyrrol, de thioindigo, de thizine indigo, d'isoindoline, d'isoindolinone, de pyranthrone ou d'isoviolanthrone ou un mélange de ces substances.

4. Procédé selon au moins l'une quelconque des revendications 1 à 3,
**caractérisé en ce qu'**on traite thermiquement une suspension de pré-pigments de C.I. Pigment Red 123 (C.I. No. 71 145), de C.I. Pigment Red 149 (C.I. No. 71 137), de C.I. Pigment Red 178 (C.I. No. 71 155), de C.I. Pigment Red 179 (C.I. No. 71 130), de C.I. Pigment Red 190 (C.I. 71 140), de C.I. Pigment Red 224 (C.I. No. 71 127), de C.I. Pigment Violet 29 (C.I. No. 71 129), de C.I. Pigment Orange 43 (C.I. No. 71 105), de C.I. Pigment Red 194 (C.1. No. 71 100), de C.I. Pigment Violet 19 (C.I. No. 73 900), de C.I. Pigment Red 122 (C.I. No. 7.3 915), de C.I. Pigment Red 192, de C.I. Pigment Red 202 (C.I. No. 73 907), de C.I. Pigment Red 207, de C.I. Pigment Red 209 (C.I. No. 73 905), de C.I. Pigment Red 206 (C.I. No. 73 900/73 920), de C.I. Pigment Orange 48 (C.I. No. 73 900/73 920), de C.I. Pigment Orange 49 (C.I. No. 73 900/73 920), de C.I. Pigment Orange 42, de C.I. Pigment Yellow 147, de C.I. Pigment Red 168 (C.I. No. 59 300), de C.I. Pigment Yellow 120 (C.I. No. 11 783), de C.I. Pigment Yellow 151 (C.I. No. 13 980), de C.I. Pigment Brown 25 (C.I.' No. 12 510), de C.I. Pigment Violet 32 (C.I. No. 12 517), de C.I. Pigment Orange 64 ; de C.I. Pigment Brown 23 (C.I. No. 20 060), C.I. Pigment Red 166 (C.I. No. 20 730), de C.I. Pigment Red 170 (C.I. No. 12 475), de C.I. Pigment Orange 38 (C.I. No. 12 367), de C.I. Pigment Red 188 (C.I. No. 12 467), de C.I. Pigment Red 187 (C.I. No. 12 486), de C.I. Pigment Orange 34 (C.I. No. 21 115), de C.I. Pigment Orange 13 (C.I. No. 21 110), de C.I. Pigment Red 9 (C.I. No. 12 460); de C.I. Pigment Red 2 (C.I. No. 12 310), de C.I. Pigment Red 112 (C.I. No. 12 370), de C.I. Pigment Red 7 (C.I. No. 12 420), de C.I. Pigment Red 210 (C.I. No. 12 477), de C.I. Pigment Red 12 (C.I. No. 12 385), de C.I. Pigment Blue 60 (C.I. No. 69 800), de C.I. Pigment Green 7 (C.I. No. 74 260),de C.I. Pigment Green 36 (C.I. No. 74 265) ; de C.I. Pigment Blue 15 : 1, 15 :2, 15:3, 15:4, 15:6 et 15 (C.I. No. 74 160) ; de C.I. Pigment Blue 56 (C.I. No. 42 800), de C.I. Pigment Blue 61 (C.I. No. 42 765:1), de C.I. Pigment Violet 23 (C.I. No. 51 319), de C.I. Pigment Violet 37 (C.I. No. 51 345), de C.I . Pigment Red 177 (C.I. No. 65 300), de C.I. Pigment Red 254 (C.I. No. 56 110), de C.I. Pigment Red 255 (C.I. No. 56 1050), de C.I. Pigment Red 264, de C.I. Pigment Red 270, de C.I. Pigment Red 272 (C.I. No. 56 1150), de C.I. Pigment Red 71, de C.I. Pigment Orange 73, de C.I. Pigment Red 88 (C.I. No. 73 312), de C.I. Pigment Yellow 175 (C.I. No. 11 784), de C.I. Pigment Yellow 154 (C.I. No. 11 781), de C.I. Pigment Yellow 83 (C.I. No. 21 108), de C.I. Pigment Yellow 180 (C.I. No. 21 290), de C.I. Pigment Yellow 181 (C.I. No. 11 777), de C.I. Pigment Yellow 74 (C.I. No. 11 741), de C.I. Pigment Yellow 213, de C.I. Pigment Orange 36 (C.I. No. 11 780), de C.I. Pigment Orange 62 (C.I. No. 11 77.5), de C.I. Pigment Orange 72, de C.I. Pigment Red 48:2/3/4 (C.I. No. 15 865:2/3/4), de C.I. Pigment Red 53:1 (C.I. No. 15 585:1), de C.I. Pigment Red 208 (C.I. No. 12 514), de C. I. Pigment Red 185 (C.I. No. 12 516), de C.I. Pigment Red 247 (C.I. No. 15 915) ou bien un mélange de ceux-ci.

5. Procédé selon au moins l'une quelconque des revendications 1 à 4,
**caractérisé en ce que** la suspension de pré-pigments est essentiellement constituée d'un pré-pigment, ainsi que d'un milieu liquide, constitué essentiellement d'eau, d'un ou plusieurs solvants organiques, d'un acide, d'une léssive-ou d'un mélange de ceux-ci.

6. Procédé selon la revendication 4,
**caractérisé en ce que** la suspension de pré-pigments contient, pour chaque partie en poids de pré-pigment, 3 à 40 parties en poids, de préférence de 4 à 20 parties en poids, du milieu liquide.

7. Procédé selon au moins l'une quelconque des revendications 1 à 6,
**caractérisé en ce que** le traitement thermique est réalisé à une température comprise entre 20 et 300°C, de préférence entre 50 et 250°C.

8. Procédé selon au moins l'une quelconque des revendications 1 à 7,
**caractérisé en ce que** le traitement thermique est réalisé à une pression comprise entre la pression normale et 100 bars.

9. Procédé selon au moins l'une quelconque des revendications 1 à 8,
**caractérisé en ce que** le débit de la suspension liquide de pré-pigments introduite et la température du traitement thermique est détecté et contrôlé par l'intermédiaire de capteurs et circuits de réglage intégrés dans le microréacteur.

10. Procédé selon au moins l'une quelconque des revendications 1 à 9,
**caractérisé en ce que** le pré-pigment, traité thermiquement en tant que suspension liquide de pré-pigments dans un microréacteur, a été produit dans un microréacteur.

11. Procédé de pigmentation de matières organiques à haut poids moléculaire naturelles ou synthétiques ou d'encres pour jet d'encre,
**caractérisé en ce qu'**on traite une suspension liquide de pré-pigments selon l'une quelconque ou plusieurs des revendications 1 à 10 et on pigmente avec cette suspension la matière organique à haut poids moléculaire ou l'encre pour jet d'encre.

12. Procédé selon la revendication 11,
**caractérisé en ce que** la matière organique à haut poids moléculaire est un toner ou un développeur électrophotographique, une peinture en poudre ou un filtre coloré.
